# EUROPÄISCHE PATENTANMELDUNG

(11) **EP 0 704 775 A1**
(43) Veröffentlichungstag der Anmeldung: **03.04.1996**
(21) Anmeldenummer: 95111497.4
(22) Anmeldetag: 21.07.1995
(51) Int. Cl.: G05B 13/02, G05B 19/042

(54) **Verfahren und Vorrichtung zur Bestimmung von relevanten Grössen bei einer Verarbeitung von textilen Gebilden**

(30) Priorität: 22.08.1994 CH 2568/94
(71) Anmelder: ZELLWEGER LUWA AG, CH-8610 Uster (CH)
(72) Erfinder: Aemmer, Peter F., Dr., CH-8907 Wettswil (CH)
(74) Vertreter: Ellenberger, Maurice

(57) **Zusammenfassung**

Die Erfindung betrifft ein Verfahren und eine Vorrichtung zur Simulation von Spinnereimaschinen im Hinblick auf deren optimalen wirtschaftlichen Einsatz und Betrieb. Ausgehend von messtechnisch ermittelten Materialeigenschaften eines Vorproduktes (1) sowie von Konfigurations- und Einstellparametern (3) einer solchen spinnereimaschine werden an einem ihr Verhalten beschreibenden Prozessmodell mittels Simulation messtechnisch ermittelbare Materialeigenschaften (2) der von ihr erzeugten Zwischen- bzw. Ausgangsprodukte vorausgesagt. Das zugrunde liegende Prozessmodell wird mittels eines sog. Neuronalen Netzes, dargestellt. Die das konkrete Verhalten dieses Neuronalen Netzes bestimmenden Koeffizienten werden in einer sog. Trainingsphase aus einem Satz von Musterdaten errechnet. Diese können aus experimentell ermittelten Versuchsergebnissen und / oder aus sonstwie schlüssig vorausgesagten Eigenschaften des Verhaltens einer solchen Spinnereimaschine stammen. Ein einmal erstelltes Prozessmodell kann mittels aus vertiefter praktischer Erfahrung eines spezialisierten Betreibers stammender Ergebnisse ganz oder teilweise an dessen Erfahrungswelt angepasst werden.

## Beschreibung

Die Erfindung betrifft ein Verfahren und eine Vorrichtung zur Voraussage von Eigenschaften von Produkten eines textilen Verarbeitungsprozesses aufgrund eines Prozessmodells, ausgehend von Materialeigenschaften, die das zur Verarbeitung bestimmte Eingangsprodukt betreffen sowie von Konfigurations- und Einstellgrössen, die den Verlauf des Verarbeitungsprozesses beeinflussen.

Aus der europäischen Patentanmeldung Nr. 93120587.6 (Shofner et al) ist ein Verfahren zur optimalen Steuerung von Textilmaschinen mittels eines Prozessmodells bekannt. Das Verfahren geht davon aus, dass das Prozessmodell als System von linearen mathematischen Gleichungen dargestellt wird, deren Koeffizienten mittels des Verfahrens der mehrfachen linearen Regression aufgrund von Resultaten aus systematisch durchgeführten Versuchen ermittelt werden.

Ein Nachteil dieses Verfahrens besteht darin, dass die Einschränkungen, die durch die Voraussetzung eines lineares Gleichungssystems als Prozessmodell geschaffen werden, den praktischen Anforderungen an die Genauigkeit der Nachbildung eines Prozesses durch ein solches Prozessmodell vielfach nicht genügen. Da die funktionellen Zusammenhänge zwischen Eingangsdaten, Ausgangsdaten sowie Konfigurations- und Einstellparametern eines Prozesses in der Regel nicht linear sind, erbringt die Nachbildung eines Prozesses mittels eines linearen Modells höchstens in einem engen Betriebsbereich einigermassen brauchbare Resultate.

Ein weiterer Nachteil dieses Verfahrens besteht darin, dass die praktische Durchführung des Verfahrens der mehrfachen linearen Regression zur Ermittlung der Koeffizienten der Gleichungen eines linearen Gleichungssystems ein sehr gutes mathematisches Verständnis seitens der ausführenden Person erfordert, wenn trotz der genannten grundsätzlichen Einschränkungen ein möglichst praxistaugliches Modell zu erstellen ist.

Es ist die Aufgabe der Erfindung, wie sie in den Patentansprüchen gekennzeichnet ist, ein Verfahren und eine Vorrichtung zu schaffen, mit denen anhand eines Prozessmodells zuverlässige Voraussagen über die Wechselwirkungen von Eingangsgrössen, Ausgangsgrössen und Einstellgrössen in der Verarbeitung von textilen Gebilden ohne die vorstehend genannten Nachteile möglich gemacht werden.

Die genannte Aufgabe wird dadurch gelöst, dass die Beziehungen zwischen den Eingangsgrössen, den Ausgangsgrössen und den Konfigurations- und Einstellgrössen durch ein gemeinhin als neuronales Netz bezeichnetes regelmässiges System von nicht linearen, unter sich mindestens annähernd gleichartigen Gleichungen vorgegeben werden.

Die genannte Aufgabe wird ferner dadurch gelöst, dass die Koeffizienten, die die strukturell definierten Gleichungen eines solchen neuronalen Netzes ausprägen, mittels eines Algorithmus des als "Backpropagation" bekannten sogenannten "Trainings-Verfahrens" für neuronale Netze aufgrund von Resultaten aus systematisch durchgeführten Versuchen ermittelt werden.

Die genannte Aufgabe wird ferner dadurch gelöst, dass ein gegebenes Grundmodell im Bereich der spezifischen Erfahrung eines Spinnereibetriebes mit einfachen Mitteln so angepasst werden kann, dass es im Bereich dieser spezifischen Erfahrung eben diese wiedergibt.

Die genannte Aufgabe wird ferner dadurch gelöst, dass mindestens eine Spinnereimaschine mit Messeinrichtungen zur Ermittlung der Eingangsgrössen, mit einem Rechner mit einer Ein- und Ausgabeeinheit für Daten, mit Mitteln für die Übertragung von Daten und Signalen zwischen dem Rechner und den Messeinrichtungen, mit einem Programmspeicher im Rechner mit einer Modellstruktur, die ein neuronales Netz darstellt und mit einem Datenspeicher mit Daten über die Eingangsprodukte, die Ausgangsprodukte und Konfigurations-und Einstellparameter vorgesehen wird.

Daraus ergeben sich wesentliche Vorteile, die beispielsweise darin bestehen, dass das Prozessmodell wegen der grossen Anpassungsfähigkeit eines neuronalen Netztes an nichtlineare Eigenschaften eines zu modellierenden Prozesses in einem grösseren Bereich mit guter Genauigkeit an das effektive Verhalten eines solchen Prozesses angepasst werden kann.

Ein weiterer Vorteil besteht darin, dass wegen der grossen Anpassungsfähigkeit eines neuronalen Netztes an nichtlineare Eigenschaften eines zu modellierenden Prozesses bei der Ermittlung der Koeffizienten, welche die dem Modell zugrunde liegenden Gleichungen ausprägen, keine spezifischen mathematischen Kenntnisse und/oder Einsichten in die mathematischen Verhältnisse notwendig sind und die dazu benötigten Verrichtungen auch von nicht speziell mathematisch geschultem Personal vorgenommen werden können.

Ein weiterer Vorteil besteht darin, dass auf diese Weise nicht nur Voraussagen über geschlossene, also einheitliche Verarbeitungen wie z. B. ein Spinnprozess aus dem ein Garn hervorgeht, gemacht werden können. Es können genau so gut zwei oder mehr Verarbeitungen, die hinter einander erfolgen, gemeinsam in ein kombiniertes Prozessmodell eingebracht werden. Dies auch dann, wenn in diesen Verarbeitungen Prozesse ablaufen, die sich durch ausgeprägte Nichtlinearitäten auszeichnen

Im folgenden wird die Erfindung anhand eines Beispiels und mit Bezug auf die beiliegenden Figuren näher erläutert, wobei
Figur 1 und 2 je ein Verfahren schematisch,
Figur 3 und 4 schematisch je eine Struktur eines Elementes für das Verfahren,
Figur 5 eine Ausführungsform eines Elementes der Struktur,
Figur 6 dieselbe Struktur nochmals schematisiert,
Figur 7, 8 und 9 je eine Übertragungsfunktion,
Figur 10 eine kombinierte Struktur eines Prozessmodells,
Figur 11 und 12 je ein Schema einer Einrichtung Verarbeitung von Produkten und einer Einrichtung zur Gewinnung von Daten,
Figur 13 schematisch einen Teil der Gewinnung von Daten,
Figur 14, 15, 16 und 17 schematisch mögliche Situationen bei der Gewinnung von Daten und
Figur 18 und 19 verschiedene Verteilungen der auftretenden Daten darstellen.

Das erfindungsgemässe Verfahren kann in zwei Hauptschritte unterteilt werden in denen einerseits die Bildung eines Prognosemodells und andererseits die Prognose durch das Prognosemodell stattfinden.

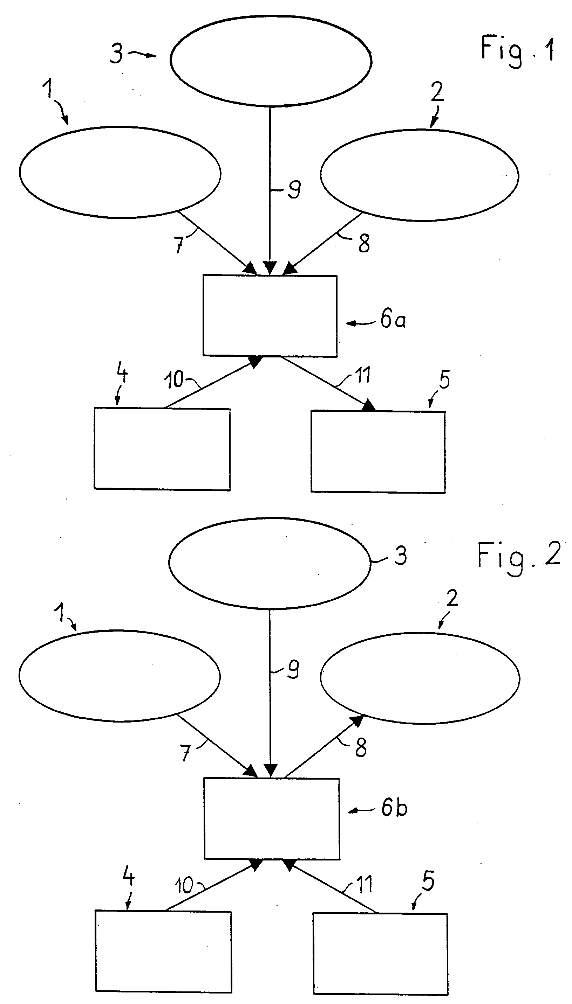

Aus Figur 1 ist der erste Hauptschritt des Verfahrens erkennbar. Man geht davon aus, dass in einem Bereiche messtechnisch erfasste Materialdaten 1 eines Eingangsproduktes, Materialdaten 2 eines Ausgangsproduktes und Einstell- oder Konfigurationsdaten 3 einer vorgegebenen Spinnereimaschine z.B. einer Karde oder einer Spinnmaschine, zur Verarbeitung des Eingangsproduktes vorliegen. Ebenfalls vorgegeben wird eine Modellstruktur 4, die zusammen mit Modellkoeffizienten 5, die mit einem Modellbildungsprozess 6a noch zu bestimmen sind, ein brauchbares Prozessmodell 6 ergeben.

Als Eingangsprodukte sind beispielsweise Fasern, Vorgarne oder andere Produkte zu nennen, aus denen ein Garn entstehen soll. Demnach sind als typische Beispiele von Materialdaten 1 die Faserlänge, der Faserdurchmesser und Art und mengenmässige Verteilung von Nissen und Verunreinigungen usw. zu nennen.

Ein typisches Ausgangsprodukt kann beispielsweise ein Garn sein, das durch Materialdaten 2 wie seine Feinheit, seine Gleichmässigkeit, seine Reissfestigkeit, die Häufigkeit von Garnfehlern und Nissen usw. bestimmt ist.

Als Einstelldaten sind beispielsweise für eine Spinnmaschine die Verstreckung des Vorgarns, die Drehung des Garns oder die Drehzahl der Spindel oder des Rotors zu nennen. Als Beispiel für Konfigurationsdaten kann die Art der Bestückung einer Karde mit Garnitur und Deckel und die dabei relevanten Abstände genannt werden usw.

Die Modellstruktur 4 wiederum ist durch die Art und die Anordnung von Grundelementen bestimmt, aus denen das Modell aufgebaut ist. Als Grundelemente kommen hier Gleichungen in Frage, die durch an sich bekannte Anordnungen mit einfachen logischen Schaltkreisen, Operationsvertärkern, Addierern, Multiplizierern usw. hardwaremässig realisiert werden können. Als Anordnung der Elemente ist deren Schaltung in Serie, parallel oder kombiniert in mehreren Schichten sowie die Art und Zahl der Verbindungen zwischen den Elementen zu verstehen. Eine solche Modellstruktur besteht aus einem System von nichtlinearen, unter sich mindestens annähernd gleichartigen Gleichungen was man gemeinhin als neuronales Netz bezeichnet.

Als Koeffizienten sind Grössen oder Zahlensätze zu verstehen, die den Gleichungen oder Elementen in der Modellstruktur zugeordnet oder zugeführt werden können und die das Verhalten der einzelnen Elemente und damit des Modells beeinflussen. Die Modellstruktur und die Koeffizienten bilden zusammen das Modell oder Prozessmodell.

Das Prozessmodell wird somit gebildet, indem eine Modellstruktur 4 vorgegeben, Materialdaten 1 des Eingangsproduktes, Materialdaten 2 des Ausgangsproduktes und Konfigurations- und Einstelldaten 3 der Maschine oder der Verarbeitung vorgegeben und indem Koeffizienten ermittelt werden, die bewirken, dass eine reproduzierbare Beziehung zwischen Datensätzen der Materialdaten 1 und 2 und den Konfigurationsdaten 3 entsteht. Dazu werden bei gegebenen Datensätzen von Material- und Konfigurationsdaten als Startwerte vorgegebene Koeffizienten solange variiert bis die Beziehung stimmt, d.h. bis bei einer Eingabe der Materialdaten 1 des Eingangsproduktes und der Konfigurations- und Einstelldaten 3, die Materialdaten 2 des Ausgangsproduktes durch das Prozessmodell mit guter Näherung ausgegeben werden können. Die so ermittelten Koeffizienten sind dann fester Bestandteil des Prozessmodells, äussern sich darin in der Einstellung seiner Elemente oder sind in einer an sich bekannten Datenbank gespeichert, die diese nach Bedarf jederzeit an die Elemente abgeben kann. Die eben beschriebenen Vorgänge sind weiter durch Pfeile 7 bis 11 verdeutlicht, die eine bestimmte Richtung für den Fluss der Daten und Vorgaben angeben. Die Pfeile 7 bis 10 sind gegen den Modellbildungsprozess 6a gerichtet und deuten damit an, dass Materialdaten, Konfigurations- und Einstelldaten und die Modellstruktur für diesen Schritt von aussen vorgegeben werden. Daraus sollen brauchbare Koeffizienten gewonnen werden, was durch die Richtung des Pfeiles 11 angedeutet ist, denn er weist auf das Resultat hin.

Aus Figur 2 ist der zweite Hauptschritt des Verfahrens erkennbar. Darin sind gleiche und aus der Fig. 1 bekannte Elemente mit gleichen Bezugszeichen versehen. Die Pfeile 8 und 11 weisen in die entgegengesetzte Richtung und deuten damit an, dass die Koeffizienten nun bekannt und damit gegeben sind und dass beispielsweise Materialdaten 2 von Ausgangsprodukten gesucht sein können. Dies ist aber nur ein Beispiel, denn es ist ebensogut denkbar mit diesem Schritt aus dem bekannten Prozessmodell nun für bekannte Materialdaten 1 und 2 Konfigurationsdaten, oder aus den Materialdaten 2 und den Konfigurations- und Einstelldaten 3, Materialdaten 1 des Eingangsproduktes zu suchen. Es ist weiter anzufügen, dass die Konfigurations- und Einstelldaten 3 in diesem Schritt ebenso Daten einer hypothetischen Verarbeitung sein könnten, also Einstelldaten einer Maschine die nicht wirklich existiert. Damit könnte die Arbeitsweise einer solchen hypothetischen Maschine ermittelt werden. Relevante Daten treten in solchen Fällen nicht als Einzeldaten oder als einzelne Werte sondern in Gruppen oder als Datensätze auf, die Produkte oder Maschinen charakterisieren.

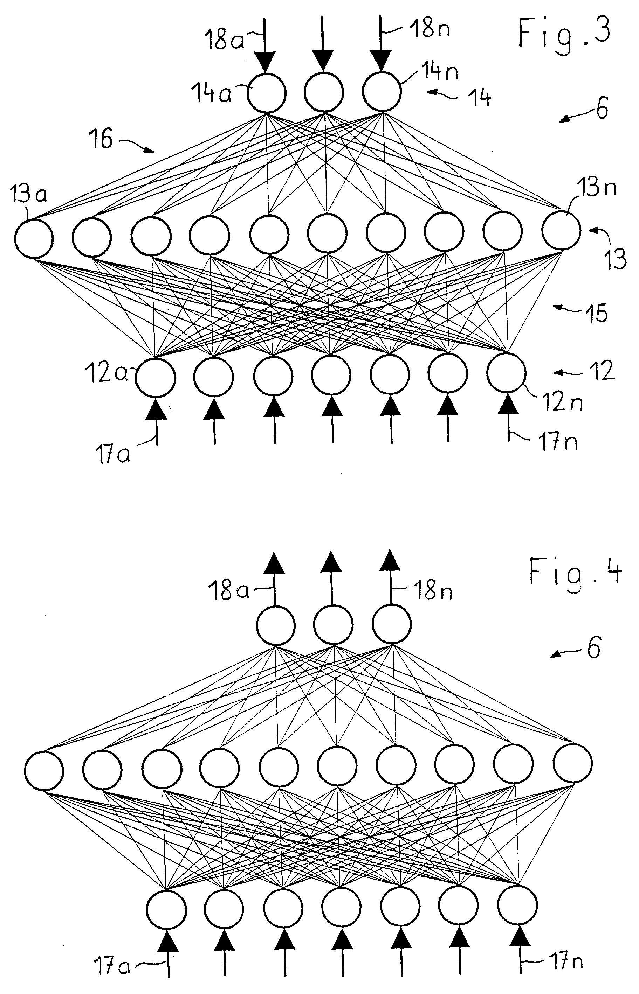

Figur 3 zeigt in schematischer Darstellung eine Struktur eines Modells wie sie in den Figuren 1 und 2 mit dem Bezugszeichen 4 bezeichnet ist. Das Modell 6 besteht aus einzelnen unter sich mindestens annähernd gleichen Gleichungen oder Elementen 12a bis 12n einer ersten Schicht 12, aus ebensolchen Elementen 13a bis 13n einer zweiten Schicht 13 und aus Elementen 14a bis 14n einer weiteren Schicht 14. Dabei sind alle Elemente der ersten Schicht 12 über Verbindungen 15 mit allen Elementen der zweiten Schicht 13 und diese wiederum mit allen Elementen der weiteren Schicht 14 über Verbindungen 16 verbunden. Die Elemente 12a bis 12n der ersten Schicht 12 weisen Eingänge 17a bis 17n für eine Gruppe von Materialdaten 1 eines Eingangsproduktes und für Konfigurations- und Einstelldaten einer spinnereimaschine auf. Die Elemente 14a bis 14n der weiteren Schicht 14 weisen Eingänge 18a bis 18n für eine Gruppe von Materialdaten 2 auf. Alle diese Elemente 12a bis 12n, 13a bis 13n und 14a bis 14n erhalten, wenn das Modell 6 im Lernmodus arbeitet, Koeffizienten, die die Daten in den Verbindungen 15 und 16 gewichten.

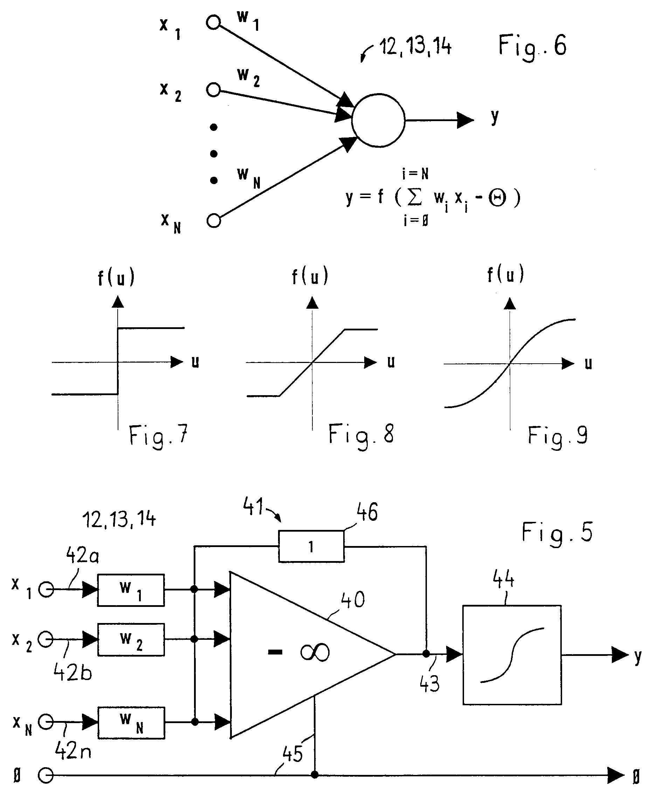

Figur 4 zeigt das Modell gemäss Fig. 3 wenn es im Prognosemodus arbeitet. Dieser besteht in der Regel darin, dass ausgehend von Eingangswerten 1 für Materialdaten und Konfigurations- und Einstelldaten 3, die über die Eingänge 17a bis 17n eingegeben werden, Ausgangswerte für Materialdaten 2 eines Ausgangsproduktes über Ausgänge 18a bis 18n ausgegeben werden. Mit 18a bis 18n sind demnach je nach Arbeitsweise des Modells im einen Falle Eingänge und im anderen Falle Ausgänge für Daten bezeichnet.

Die in den Figuren 3 und 4 dargestellten Modelle oder Modellstrukturen sind der Fachwelt als sogenannte neuronale Netze bekannt und beispielsweise aus R. Lippmann "An Introduction to Computing with Neural Nets", IEEE, Acoustics, Speech and Signal Processing Magazine, April 1987, Seiten 4 - 22 bekannt.

Figur 5 zeigt beispielsweise den Aufbau einer Gleichung oder eines Elementes 12, 13 oder 14 aus den Figuren 3 und 4 wie er in traditioneller Elektronik realisiert werden könnte. In diesem Falle besteht ein solches Element aus einem Operationsverstärker 40, mit einer Rückkopplung 41. Der Operationsverstärker 40 hat einen oder mehrere Eingänge 42a bis 42n und einen Ausgang 43, der in ein nachgeschaltetes Element 44 mündet, das als Filter, Verzerrer oder Begrenzer usw. ausgebildet sein kann. Der Operationsverstärker 40 ist ebenfalls an eine Speiseleitung 45 angeschlossen. Die Verstärkung wird durch den Widerstand 46 der Rückkopplung 41 sowie durch Vorwiderstände W1, W2, Wn usw. bestimmt, die den einzelnen Eingängen 42a, 42b 42n zugeordnet sind. Diese Vorwiderstände W1 bis Wn sind einstellbar, so dass damit die Verstärkung des Elementes 12, 13, 14 in bezug auf die einzelnen Eingänge eingestellt werden kann. Das Einstellen der Verstärkung entspricht hier dem, was bisher als Einstellung der Koeffizienten bezeichnet wurde. Die Vorwiderstände können zu diesem Zweck beispielsweise an einen Rechner oder an einen Koeffizientengenerator angeschlossen sein, durch den diese Vorwiderstände W1, Wn auch durch automatisierte Eingbe von Werten individuell eingestellt werden können.

Figur 6 zeigt ein Element 12, 13, 14 nochmals in schematischer Darstellung mit der Formel für seine Übertragungsfunktion. Darin sind mit x die Eingangswerte, mit W die Werte der Vorwiderstände oder die Koeffizienten und mit theta eine Konstante bezeichnet.

Die Figuren 7, 8 und 9 zeigen je ein typisches Beispiel einer Übertragungsfunktion, die durch einen Begrenzer 44 realisiert werden könnte, wobei mit u die Eingabewerte und mit f(u) die Ausgabewerte bezeichnet sind.

Die in den Figuren 3 bis 6 dargestellte Struktur mit den Elementen muss nicht in der gezeigten Weise aus diskreten Elementen aufgebaut sein. Sie kann ebensogut durch einen Rechner realisiert sein, dessen Programm einen solchen Aufbau funktionsmässig nachbildet.

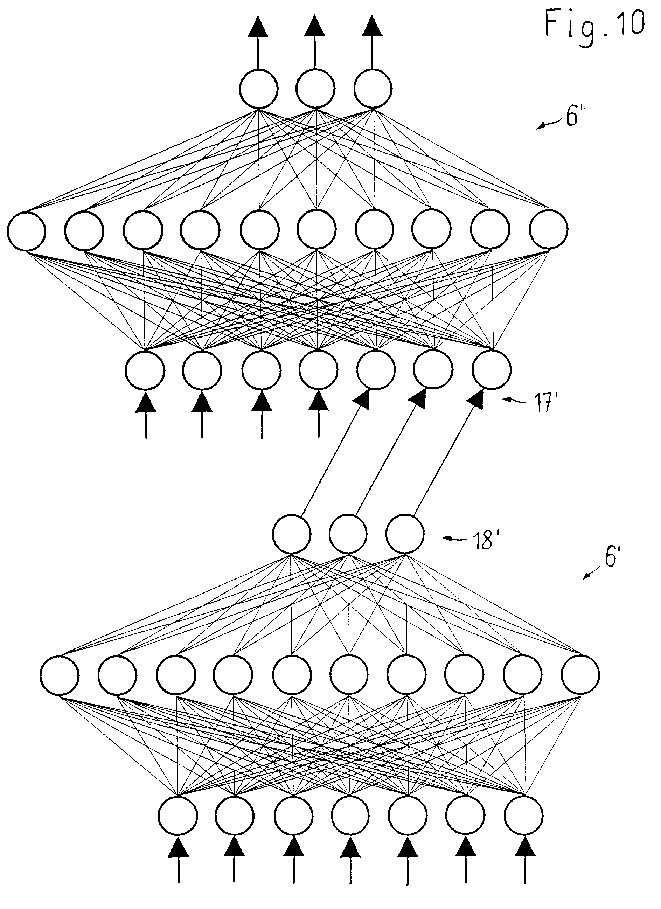

Figur 10 zeigt wiederum schematisch ein Prozessmodell 6' einer ersten Spinnereimaschine und ein Prozessmodell 6'' einer weiteren Spinnereimaschine die in nun bekannter Weise unabhängig voneinander gebildet werden. Anschliessend können die Prozessmodelle miteinander verbunden werden, indem mindestens ein Teil der Ausgangsdaten 18' des ersten Prozessmodells 6' als Eingangsdaten 17' des weiteren Prozessmodells 6'' verwendet werden, wobei jedem Prozessmodell eigene Daten über die Konfiguration und die Einstellparameter zugeführt werden.

Das erfindungsgemässe Verfahren welches die Vorteile der genannten Netze für bestimmte Probleme bei der Verarbeitung von Eingangsprodukten zu Zwischenprodukten oder zu textilen Gebilden nutzt, lässt sich an den weiteren und nachfolgend beschriebenen Figuren darstellen.

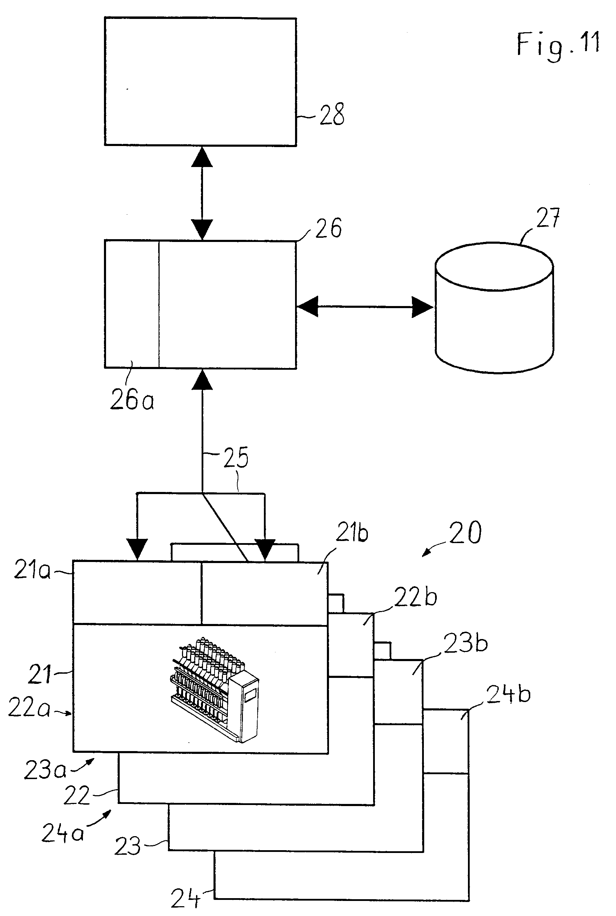

Figur 11 zeigt schematisch bekannte Verarbeitungen 20 wie sie beispielsweise auf Karden, Spinnmaschinen usw. ablaufen. Mehrere Verarbeitungen laufen hier parallel ab, so dass mehrere parallel angeordnete Maschinen 21, 22, 23, 24 usw. schematisch gezeigt sind, die alle eine Steuerung 21a, 22a, 23a, 24a usw. sowie eine Einrichtung 21b, 22b, 23b, 24b zur Rückmeldung von Daten aufweisen. Die Steuerungen 21a bis 24a sind insbesondere zur Ausführung von Steuerbefehlen, die sie aus einem Rechner 26 oder einer Datenbank 27 erhalten können, ausgebildet. Die Einrichtungen 21b bis 24b sind beispielsweise als Sensoren ausgebildet, die Einstell- und Zustandswerte der Maschinen 21 bis 24 melden. Das können beispielsweise Drehzahlmesser, Druckfühler usw. mit ihren Auswerteschaltungen sein. Als Maschinen in diesem Sinne sind beispielsweise Karden, Ringspinnmaschinen, Rotorspinnmaschinen usw. oder eben allgemein Spinnereimaschinen zu verstehen, die alle ihre eigene Steuerung und Einrichtung zur Überwachung oder Rückmeldung von Daten für verschiedene Parameter haben. Alle diese Maschinen 21 bis 24 sind über einen Feldbus 25 miteinander und zusätzlich mit einem Rechner 26 als Verarbeitungseinheit verbunden, der wiederum an einen Datenspeicher mit darin abgelegter Datenbank 27 und an eine Ein-und Ausgabeeinheit 28 für Daten angeschlossen ist. Die Verarbeitungseinheit ist als Rechner 26 mit zugeordnetem Programmspeicher 26a ausgebildet und dient dazu, von den Maschinen 21 usw. Daten zu empfangen oder Daten an diese abzugeben. Diese Verarbeitungseinheit kann insbesondere auch dazu verwendet werden oder ausgebildet sein, Eingangsgrössen, Ausgangsgrössen und Einstellgrössen der einzelnen Maschinen zu sammeln und miteinander in Beziehung zu bringen und entsprechende Datensätze in der Datenbank 27 abzulegen.

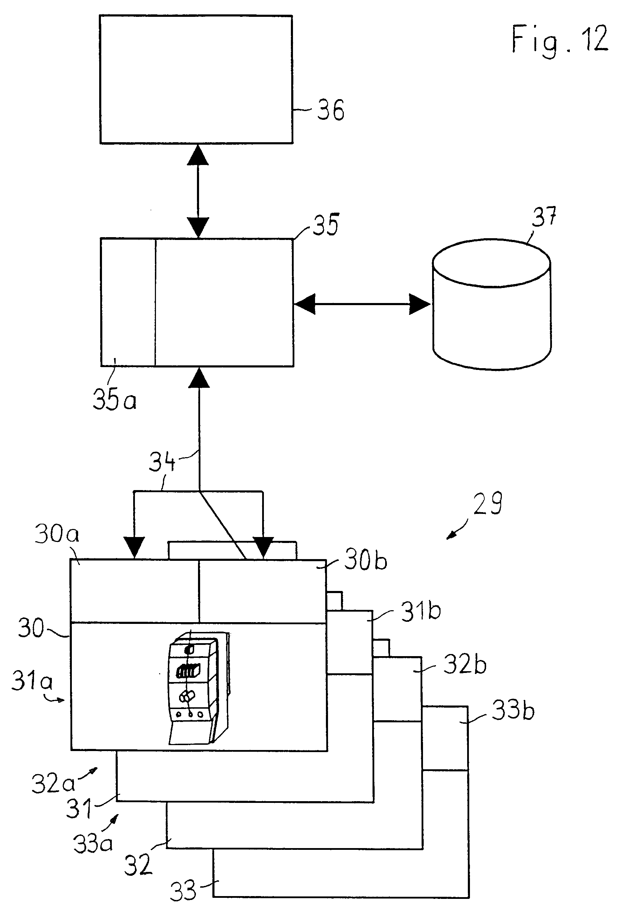

Eine vergleichbare Anordnung wie sie in Fig. 11 für einen Produktionsprozess dargestellt ist, findet man in der Figur 12 für ein textiles Prüflabor. Im Prüflabor können verschiedene Prüfungen 29 durchgeführt werden. Ein erstes Prüfinstrument 30 ist beispielsweise zur Prüfung von Querschnitt und Masse von Garnen ausgebildet. Ein zweites Prüfinstrument 31 ist beispielsweise zur Prüfung von Vliesen oder Bändern ausgebildet. Ein drittes Prüfinstrument 32 ist für die Messung verschiedener Grössen an einzelnen Fasern ausgebildet. Ein weiteres Prüfinstrument 33 ist beispielsweise zur Prüfung der Reissfestigkeit von Garnen ausgebildet usw. Alle Prüfinstrumente 30 bis 33 haben eine eigene Steuerung 30a bis 33a und einen eigenen Datenspeicher 30b bis 33b. Die Steuerungen 30a bis 33a geben beispielsweise Steuerbefehle im Sinne von Aufträgen an die eigentlichen Prüfinstrumente 30a bis 33a ab. Die Datenspeicher 30b bis 33b haben beispielsweise Messergebnisse gespeichert. Über die Steuerungen und die Datenspeicher sind die Prüfinstrumente 30 bis 33 an einen gemeinsamen Feldbus 34 angeschlossen, der wiederum an eine Verarbeitungseinheit 35 angeschlossen ist. Diese ist als Rechner mit einem Programmspeicher 35a aufgebaut. Wie bereits bekannt, ist diese auch an eine Ein-und Ausgabeeinheit 36 und einen Datenspeicher mit darin abgespeicherter Datenbank 37 angeschlossen. Es ist möglich eine einzige und gemeinsame Verarbeitungseinheit 26 oder 35 für eine oder mehrere Spinnereimaschinen 21 bis 24 und davon räumlich getrennte Messeinrichtungen oder Prüfinstrumente 30 bis 33 vorzusehen. Es ist aber auch denkbar, jeder Spinnereimaschine 21 bis 24 einen Rechner zuzuordnen, der beispielsweise Teil der Steuerung 21a bis 24a sein und im Sinne einer Verarbeitungseinheit im obengenannten Sinne arbeiten kann. Dann arbeitet der Feldbus 25 als Mittel zum Verschieben der Daten zwischen diesen Rechnern. Die Datenbanken 27 und/oder 37 weisen einen Bereich mit gespeicherten Koeffizienten auf, die dem Rechner 26 und/oder 35 zugeführt werden können und so die im Programmspeicher 26a, 35a gespeicherte Modellstruktur zum Prozessmodell aufbauen können. Auch wenn man die Prüfinstrumente 30 bis 33 mit je einem eignen Rechner versehen könnte, so ist es doch sinnvoll, einen gemeinsamen Rechner 35, wie in Fig. 12 gezeigt, vorzusehen. Dies, weil der Aufbau einer Koeffizientenmatrix nach dem Back-Propagation-Verfahren einen hohen Rechenaufwand erfordert, der die Möglichkeiten eines einzelnen Rechners, wie er einem Prüfinstrument zugeordnet ist, übersteigt.

Zwischen einem Textilprüflabor, das wie in Fig. 12 dargestellt aufgebaut sein kann und einem Produktionsprozess oder einer Produktionsanlage, die beispielsweise wie in Fig. 11 dargestellt aufgebaut sein kann, besteht der nachfolgend beschriebene Zusammenhang und damit sind auch die nachfolgend beschriebenen Wechselwirkungen möglich.

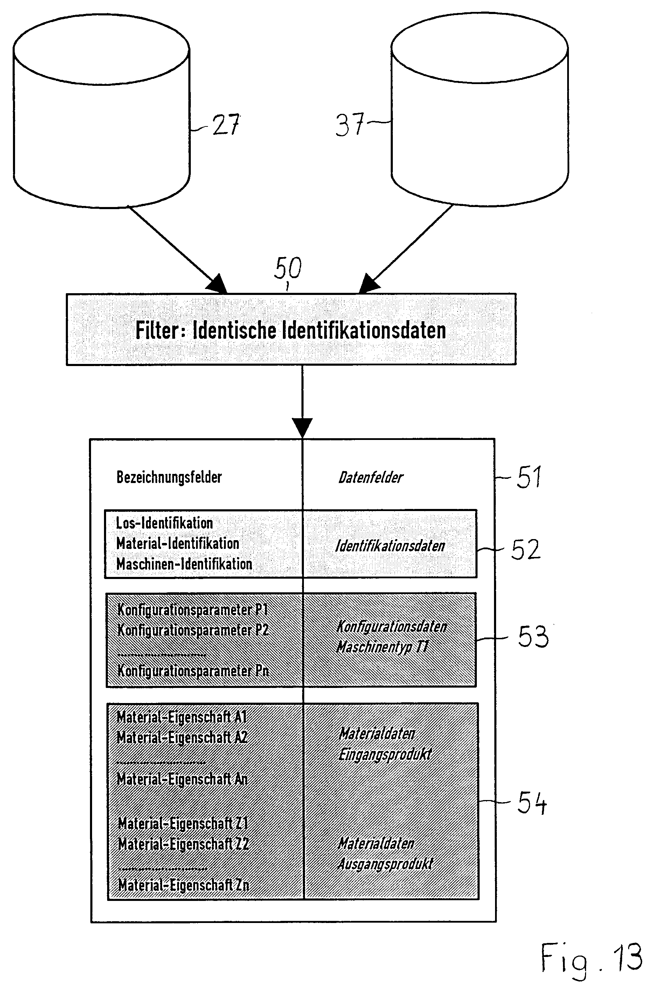

Das Prüflabor wird mit Stichproben beschickt, die aus dem Produktionsprozess stammen. Die Stichproben werden vor, zwischen und am Ende der einzelnen Verarbeitungen oder Maschinen entnommen. Durch Prüfung der Stichproben ist der Erfolg in den einzelnen Verarbeitungen im Prüflabor messbar. Durch die Vernetzung der einzelnen Prüfinstrumente 30, 31, 32, 33 usw. über den Feldbus 34 und die Verarbeitungseinheit 35 können für jede Verarbeitung oder Maschine 21, 22, 23, 24 usw. Eingangsdaten und Ausgangsdaten des Materials aus den entsprechenden Prüfungen erfasst und in der Datenbank 37 abgelegt werden. Durch die entsprechende Vernetzung der Maschinen 21, 22, 23, 24 usw. über den Feldbus 25 können die Konfigurations- und Einstelldaten der betreffenden Maschinen 21, 22, 23, 24, usw. über die Verarbeitungseinheit 26 in der Datenbank 27 abgelegt werden. So können alle Daten für die Erstellung eines Modells gesammelt und geordnet gespeichert werden, so dass diese abrufbar sind. Durch geeignetes Zusammenführen der betreffenden Daten aus den beiden Datenbanken 27 und 37 kann dafür gesorgt werden, dass auch die richtigen Daten kombiniert werden. Dies wird mit der Darstellung in Fig. 13 gezeigt. Dies beispielsweise dadurch, dass der Feldbus 25 der Spinnereimaschinen 21 bis 24 und der Feldbus 34 der Prüfinstrumente 30 bis 33 identisch definiert und miteinander verbunden werden.

Figur 13 zeigt insbesondere in schematischer Darstellung die beiden Datenbanken 27 und 37, die in dem Sinne an ein softwaremässig realisiertes Filter 50 angeschlossen sind, als der Inhalt beider Datenbanken 27 und 37 diesem Filter wenigstens zeitweise zugeführt werden kann. Im Filter 50 wird dafür gesorgt, dass die einander entsprechenden Material-Ein-und Ausgangsdaten mit den entsprechenden Daten derjenigen Maschine oder Verarbeitung zusammengeführt werden, die die an den Ausgangsdaten ablesbare Veränderung am Material mit den Eingangsdaten herbeigeführt hat. Beispielsweise sollen Ausgangsdaten, die die Garnfeinheit und die Garngleichmässigkeit betreffen zu Einstelldaten einer Spinnmaschine und zu Eingangsdaten eines Vlieses oder Bandes in Beziehung gebracht werden. Damit dies gelingt, müssen verschiedenartige Daten zusammengeführt werden, die beispielsweise im Feld 51 aufgeführt sind. Dieses ist unterteilt in ein Feld 52 für Identifikationsdaten, ein Feld 53 für Maschinen- oder Konfigurationsdaten und ein Feld 54 für Materialdaten. Aus der Datenbank 27 müssen demnach die Daten aus den Feldern 52 und 53 herausgezogen und aus der Datenbank 37 müssen die Daten aus den Feldern 52 und 54 herausgezogen werden. Dies geschieht beispielsweise in einer der Verarbeitungseinheiten 26 oder 35, die über ein Filter 50 verfügen, das anhand der Identifikationsdaten die Konfigurationsdaten und die Materialdaten zusammenführen kann. Dieses Zusammenführen ist in der Datenbanktechnik an sich bekannt und wird beispielsweise bei sogenannten "relationalen Datenbankensystemen" durch den sogenannten "Join-Befehl" ausgelöst.

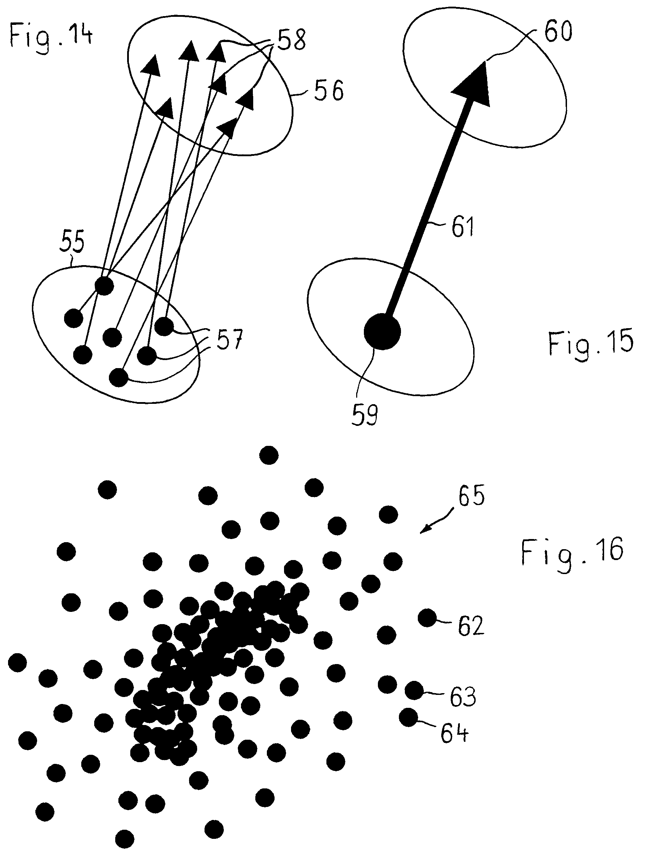

Das Modell 6 (Fig. 3 und 4) ist umso besser und universaler anwendbar, wenn möglichst verschiedenartige und in ihrer Gesamtheit möglichst vollständige experimentell ermittelte Material-und Konfigurationsdaten bei der Modellbildung berücksichtigt wurden. Holt man diese Daten aus einer laufenden Produktion, so kann es sein, dass man nur in einem engen Bereich gelegene Daten zur Verfügung hat. Solche Bereiche 55 und 56 sind für Eingangsdaten 57 und Ausgangsdaten 58 in der Figur 14 gezeigt. In solchen Fällen kann es vorteilhaft sein davon abgeleitete Daten zu ermitteln, beispielsweise indem die Eingangsdaten zu einem Mittelwert 59 und die Ausgangsdaten zu einem Mittelwert 60 gemitttelt werden, wie dies in der Figur 15 gezeigt ist. Dies ist insbesondere dann sinnvoll, wenn die Ein- und die Ausgangsdaten lediglich wegen statistischer Schwankungen nicht genau übereinstimmen. Wenn das der Fall ist, kann die Modellbildung beschleunigt erfolgen, denn es ist jeweils nur ein Datensatz vorhanden. Dies ist durch einen einzigen Pfeil 61 angedeutet.

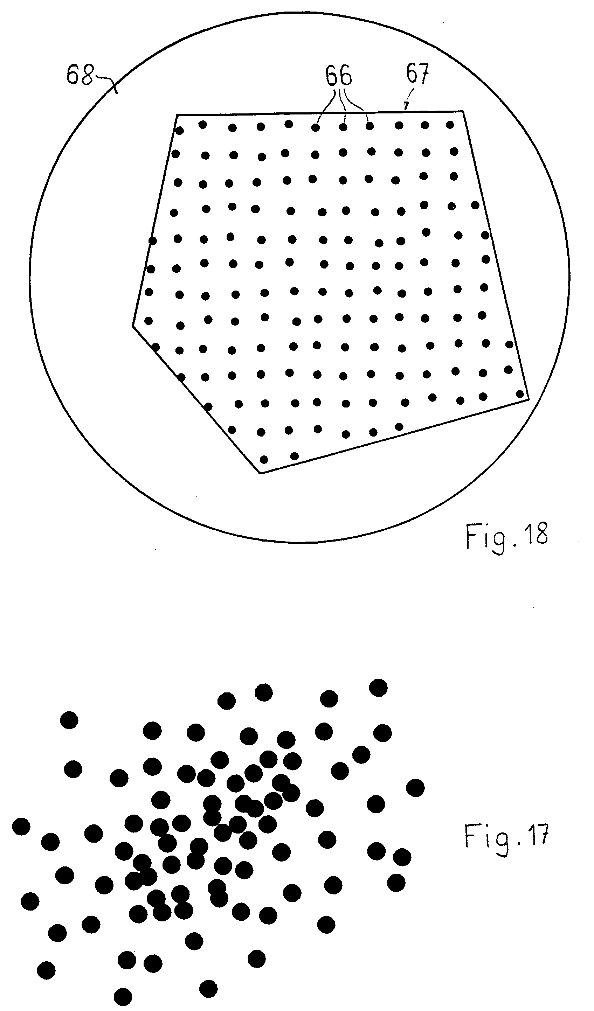

Liegen Datensätze vor, wie sie in der Figur 16 gezeigt sind, wo jeder Punkt 62, 63, 64 usw. einen Datensatz oder eine Gruppe von Datensätzen darstellt, so kann die obengenannte Mittelung für Bereiche 65 oder Teile dieser Bereiche vorteilhaft sein, wo Daten gehäuft auftreten. Dies führt dann zu einem verdünnten Datensatz, wie er in der Figur 17 dargestellt ist.

Die Erfahrungen, die über die Daten in das Modell eingebracht sind, können sehr verschiedenartig sein. Sie können sich über einen grossen Bereich von Materialdaten und Konfigurations- und Einstelldaten erstrecken, so wie dies Punkte 66 in einem Bereich 67 in der Figur 18 andeuten. Darüberhinaus wird es immer auch ein Gebiet 68 ausserhalb des Gebietes 67 geben für das die Erfahrungen des Modells nicht gelten, weil sie durch keine Erfahrungen gestützt sind, weil eben keine Daten vorhanden waren.

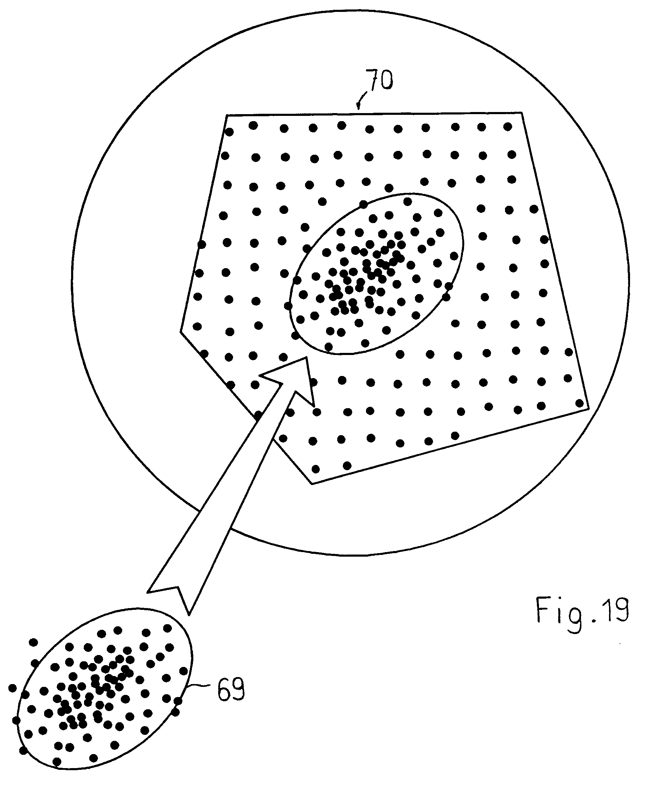

Wie Figur 19 zeigt, kann es aber auch einen Teilbereich 69 mit besonders grosser Erfahrung innerhalb eines Bereiches 70 mit durchschnittlicher Erfahrung geben. Das bedeutet, dass das Prozessmodell ausgehend von Daten aus einem Teilbereich 69 des Bereiches 70 gebildet wird. Das kann z.B. auch bedeuten, dass die grössere Erfahrung später in das Gebiet 70 eingebracht wurde.

Mit dem vorgenannten und eben beschriebenen Verfahren sind viele Möglichkeiten zu dessen vorteilhaften Nutzung und viele Ausführungen dazu möglich. Insbesondere ist es damit möglich, ausgehend von vorhandenen oder teils auch gesuchten Materialdaten Konfigurations- und Einstelldaten zu bestimmen, oder mit gegebenen Konfigurations- und Einstelldaten einen Teil der fehlenden Materialdaten vorauszubestimmen. Voraussetzung dazu ist aber, dass das Modell schon erstellt ist. Es ist z.B. so denkbar, einer Produktionsmaschine ein solches Modell zuzuordnen woraus der unerfahrene Betreiber der Maschine sofort Konfigurationswerte ableiten kann, die ihm erlauben aus einem vorgegebenen Eingangsmaterial ein gewünschtes Ausgangsmaterial zu erzeugen, oder eben festzustellen, dass es unmöglich ist. Ein geschickter Betreiber der Maschine kann aber beispielsweise für einen Bereich 69 in dem er besonders grosse Erfahrung hat, das Modell verbessern oder verfeinern um noch genauere Voraussagen machen zu können.

Auf jeden Fall kann mit solchen Modellen unerfahrenen Leuten geholfen werden, einen Produktionsprozess günstig zu beeinflussen. Erfahrenen Leuten ist damit die Möglichkeit gegeben, die Erfahrung zu vertiefen.

## Patentansprüche

1. Verfahren zur Simulation einer Verarbeitung eines Eingangsproduktes in einer Spinnereimaschine mittels eines Prozessmodells, dadurch gekennzeichnet, dass für das Prozessmodell ein gemeinhin als neuronales Netz bezeichnetes regelmässiges System von nichtlinearen, unter sich mindestens annähernd gleichartigen Gleichungen als Modellstruktur (4) vorgegeben wird, dass Daten (1, 2) von Eingangsprodukten und von Ausgangsprodukten, die durch die Verarbeitung entstehen, aus einem Bereich messtechnisch erfasst und zusammen mit Daten (3) über die Konfiguration und über Einstellparameter der Verarbeitung in der Spinnereimaschine der Modellstruktur (4) zugeführt werden und dass das neuronale Netz durch diese Daten eingestellt und dabei das Prozessmodell gebildet wird.

2. Verfahren nach Anspruch 1, dadurch gekennzeichnet, dass in einem weiteren Schritt eine erste Gruppe von Daten und eine zweite Gruppe von Daten in das Prozessmodell eingegeben werden und dass daraus eine dritte Gruppe von Daten ermittelt wird, wobei Daten der Eingangsprodukte, Daten der Ausgangsprodukte und Daten über die Konfiguration und Einstellparameter der Spinnereimaschine unter sich jeweils eine Gruppe bilden.

3. Verfahren nach Anspruch 1, dadurch gekennzeichnet, dass die messtechnisch erfassten Daten experimentell ermittelt werden und auch weitere davon abgeleitete Daten (59, 60) umfassen.

4. Verfahren nach Anspruch 2, dadurch gekennzeichnet, dass das Ermitteln einer dritten Gruppe von Daten mit modifizierten Daten der ersten oder zweiten Gruppe wiederholt wird.

5. Verfahren nach Anspruch 1, dadurch gekennzeichnet, dass das Prozessmodell ausgehend von Daten aus einem Teilbereich (69) des Bereiches (70) gebildet wird.

6. Verfahren nach Anspruch 1, dadurch gekennzeichnet, dass aus den eingegebenen Daten für die gegebene Modellstruktur Koeffizienten abgeleitet werden, die das Verhalten des neuronalen Netzes festlegen.

7. Verfahren nach Anspruch 3, dadurch gekennzeichnet, dass die Spinnereimaschine durch ihre Konfiguration und durch Einstellparameter eingestellt wird, die durch das Prozessmodell ermittelt werden.

8. Verfahren nach Anspruch 1 oder 2, dadurch gekennzeichnet, dass die Daten von Produkten wie Eingangs- und Ausgangsprodukten zusammen mit den betreffenden Produkten so markiert werden, dass eine eindeutige Zuordnung der Daten zu den Produkten ermöglicht wird und dass die Konfiguration und die Einstellparameter zusammen einen Datensatz bilden, der ebenfalls markiert wird um eine eindeutige Zuordnung zu den Produkten zu ermöglichen, die in Funktion dieser Konfiguration und Einstellparameter verarbeitet wurden.

9. Verfahren nach Anspruch 8, dadurch gekennzeichnet, dass die Daten messtechnisch durch eigenständige, von der Spinnereimaschine räumlich getrennte Messgeräte (30, 31, 32, 33) erfasst werden.

10. Vorrichtung zur Durchführung des Verfahrens nach Anspruch 1, gekennzeichnet durch mindestens eine Spinnereimaschine (21, 22, 23, 24) mit Einrichtungen (21b, 22b, 23b, 24b) zur Rückmeldung von Daten, einen Rechner (26) mit einer Einund Ausgabeeinheit (28) für Daten, Mittel (25) für die Übertragung von Daten und Signalen zwischen dem Rechner und den Einrichtungen, einen Programmspeicher (26a) im Rechner mit einer Modellstruktur, die ein neuronales Netz darstellt und eine Datenbank (27) mit Daten über die Eingangsprodukte, die Ausgangsprodukte und Konfigurations- und Einstellparameter.

11. Vorrichtung nach Anspruch 10, dadurch gekennzeichnet, dass Mess- oder Prüfeinrichtungen (30 bis 33) von der Spinnereimaschine räumlich getrennt angeordnet sind und über Mittel (34) für die Übertragung von Daten und Signalen zwischen einem Rechner (35) und den Mess- und Prüfeinrichtungen verbunden sind.

12. Verfahren nach Anspruch 1, dadurch gekennzeichnet, dass für eine erste Spinnereimaschine und eine weitere Spinnereimaschine ein erstes und ein weiteres Prozessmodell (6', 6'') unabhängig voneinander gebildet werden, dass die Prozessmodelle miteinander verbunden werden, indem mindestens ein Teil der Ausgangsdaten (18') des ersten Prozessmodells als Eingangsdaten (17') des weiteren Prozessmodells verwendet werden, wobei jedem Prozessmodell eigene Daten über die Konfiguration und die Einstellparameter zugeführt werden.

13. Vorrichtung nach Anspruch 11, dadurch gekennzeichnet, dass die Mittel (25, 34) je als Feldbus ausgebildet sind und dass die Mittel (25, 34) miteinander verbunden sind.
